# FASCICULE DE BREVET EUROPEEN

(11) **EP 3 620 388 B1**
(45) Date de publication et mention de la délivrance du brevet: **17.03.2021**
(21) Numéro de dépôt: 19194399.2
(22) Date de dépôt: 29.08.2019
(51) Int. Cl.: B64D 29/08, B64C 7/02

(54) **ENSEMBLE TURBOMACHINE D'AERONEF COMPORTANT UN CAPOT ARTICULE**
TURBOTRIEBWERK-ANORDNUNG EINES LUFTFAHRZEUGS, DIE EINEN SCHARNIERDECKEL UMFASST
AIRCRAFT TURBINE ENGINE ASSEMBLY COMPRISING A HINGED COVER

(30) Priorité: 04.09.2018 FR 1857927
(43) Date de publication de la demande: 11.03.2020
(73) Titulaire: AIRBUS OPERATIONS, 31060 Toulouse Cedex 9 (FR)
(72) Inventeur: COMBES, Stéphane, 31660 BUZET SUR TARN (FR); GELIOT, Jean, 31400 TOULOUSE (FR)
(74) Mandataire: Cabinet Le Guen Maillet

(56) Documents cités:
- WO-A1-2008/006826
- US-A- 5 826 823
- US-A1- 2015 110 613

## Description

### DOMAINE TECHNIQUE

La présente invention concerne un ensemble turbomachine d'un d'aéronef comportant un capot articulé, ainsi qu'un aéronef comportant un tel ensemble.

### ETAT DE LA TECHNIQUE ANTERIEURE

Un aéronef comporte classiquement un fuselage de part et d'autre duquel est fixée une aile. Chaque aile supporte au moins un mât d'accrochage qui supporte à son tour un ensemble turbomachine composé d'une nacelle et d'un moteur. La nacelle forme la surface aérodynamique qui entoure le moteur.

Le mât d'accrochage est fixé entre la structure de l'aile et l'ensemble turbomachine.

De nombreux systèmes, par exemple électriques et hydrauliques, sont disposés au niveau de la jonction entre le mât d'accrochage et l'ensemble turbomachine. Ces systèmes sont masqués par des capots aérodynamiques, comme par exemple certains de ceux constituant la nacelle.

En particulier, pour atteindre certains systèmes comme les jonctions électriques entre le mât d'accrochage et le moteur, il est nécessaire de démonter plusieurs capots situés en partie haute de la nacelle.

Actuellement, ces capots sont fixés par plusieurs vis de fixation, et lors des étapes de maintenance, le retrait et la remise en place de chaque capot sont longs.

Le document WO-2008/006826 divulgue un ensemble moteur pour aéronef comprenant un moteur, un dispositif d'accrochage du moteur ainsi qu'une nacelle entourant le moteur et pourvue d'une entrée d'air et de capots de soufflante, ledit dispositif d'accrochage comportant une structure aérodynamique avant sur laquelle les capots de soufflante sont articulés. Les documents US-A-5,826,823 et US-A-2015/110613 divulguent des ensembles turbomachines de l'état de la technique.

### EXPOSE DE L'INVENTION

Un objet de la présente invention est de proposer une nacelle qui comporte un capot articulé qui présente une surface étendue et qui est articulé de manière à faciliter l'accès aux systèmes localisés à la jonction entre le mât d'accrochage et le moteur.

A cet effet, est proposé un ensemble turbomachine d'un aéronef comprenant une nacelle, ladite nacelle comportant :
- une structure comportant une zone d'accrochage destinée à se fixer à un mât d'accrochage de l'aéronef,
- une entrée d'air délimitée par un premier capot formant une lèvre d'entrée d'air et fixé à la structure,
- un capot articulé disposé en partie haute de la nacelle, à l'arrière du premier capot et entre ledit premier capot et la zone d'accrochage,
- un système d'articulation assurant le déplacement du capot articulé alternativement entre une position fermée dans laquelle le capot articulé est en continuité aérodynamique avec les autres capots et une position ouverte dans laquelle le capot articulé libère une ouverture dans la nacelle, et comportant de part et d'autre d'un plan médian XZ de la nacelle, une bielle avant et une bielle arrière qui sont l'une devant l'autre, où les deux extrémités de chaque bielle sont dans un même plan parallèle au plan médian XZ, où une première extrémité de chaque bielle est montée articulée sur le capot articulé, où une deuxième extrémité de chaque bielle est montée articulée sur la structure, et
- un système de verrouillage actionnable depuis l'extérieur de la nacelle entre une position verrouillée dans laquelle le système de verrouillage verrouille le capot articulé sur la structure et une position déverrouillée dans laquelle le système de verrouillage ne verrouille pas le capot articulé sur la structure et
- au moins un vérin dont une extrémité est montée articulée sur la structure et dont l'autre extrémité est montée articulée sur le capot articulé et qui est agencé pour assister l'ouverture du capot articulé et pour assurer le maintien en position ouverte du capot articulé.

Une telle nacelle facilite donc le travail des techniciens, puisqu'un seul capot articulé permet de remplacer plusieurs capots et il peut être ouvert et fermé facilement et rapidement.

Avantageusement, le système de verrouillage comporte plusieurs loquets répartis autour du capot articulé.

Avantageusement, chaque loquet comporte un coffre fixé sous le capot articulé et portant un pêne, et une têtière fixée à la structure et portant une gâche, où le pêne est mobile en translation dans le coffre entre une position verrouillée dans laquelle il se verrouille dans la gâche et une position déverrouillée dans laquelle il ne se verrouille pas dans la gâche.

Avantageusement, l'ensemble turbomachine comporte plusieurs tétons fixés sous le capot articulé et, pour chaque téton, une fenêtre solidaire de la structure, où en position fermée, chaque téton se positionne dans une fenêtre.

Avantageusement, l'ensemble turbomachine comporte au moins un vérin dont une extrémité est montée articulée sur la structure et dont l'autre extrémité est montée articulée sur le capot articulé.

L'invention propose également un aéronef comportant un mât d'accrochage et un ensemble turbomachine selon l'une des variantes précédentes, accroché audit mât d'accrochage au niveau de la zone d'accrochage.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef selon l'invention,
la Fig. 2 est une vue en perspective d'un ensemble turbomachine selon l'invention,
la Fig. 3 est une vue de côté de l'ensemble turbomachine de la Fig. 2, et
la Fig. 4 est une vue en perspective d'un exemple d'un loquet de verrouillage de l'ensemble turbomachine.

### EXPOSE DETAILLE DE MODES DE REALISATION

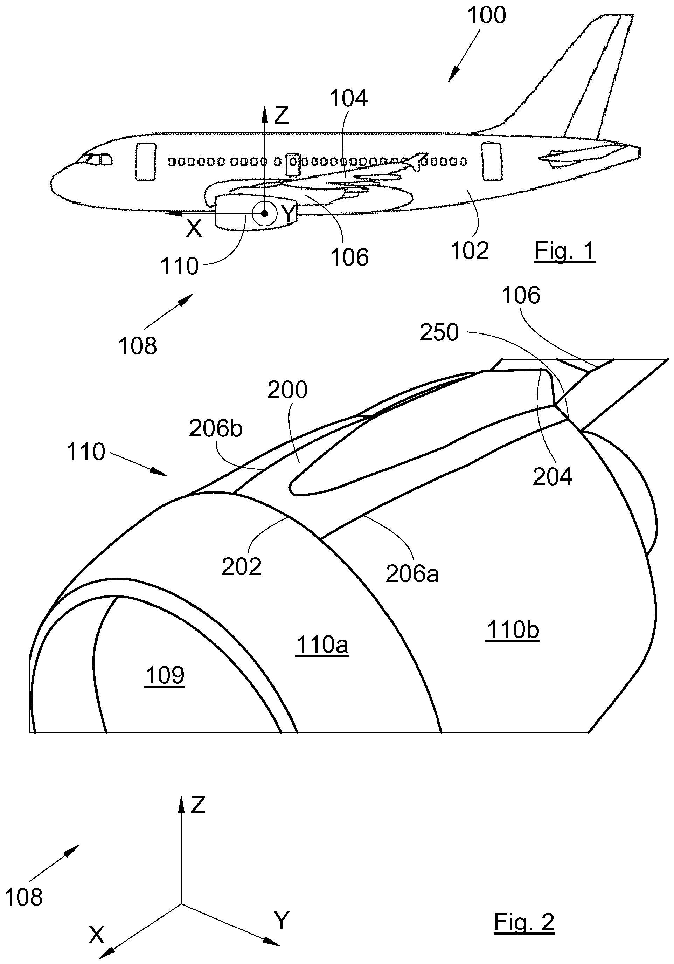

La Fig. 1 montre un aéronef 100 qui comporte un fuselage 102 de part et d'autre duquel est fixée une aile 104. Sous chaque aile 104 est fixé un mât d'accrochage 106 auquel est accroché un ensemble turbomachine 108 composé d'une nacelle 110 et d'un moteur (non représenté) entouré par la nacelle 110.

Dans la description qui suit, et par convention, on appelle X l'axe longitudinal de la nacelle 110 orienté positivement dans le sens d'avancement de l'aéronef 100 et qui est également parallèle à l'axe longitudinal de l'aéronef 100, on appelle Y l'axe transversal de la nacelle 110 qui est horizontal lorsque l'aéronef 100 est au sol, et Z l'axe vertical ou hauteur verticale lorsque l'aéronef 100 est au sol, ces trois directions X, Y et Z étant orthogonales entre elles et formant un repère orthonormé.

Le plan XZ constitue un plan médian de la nacelle 110.

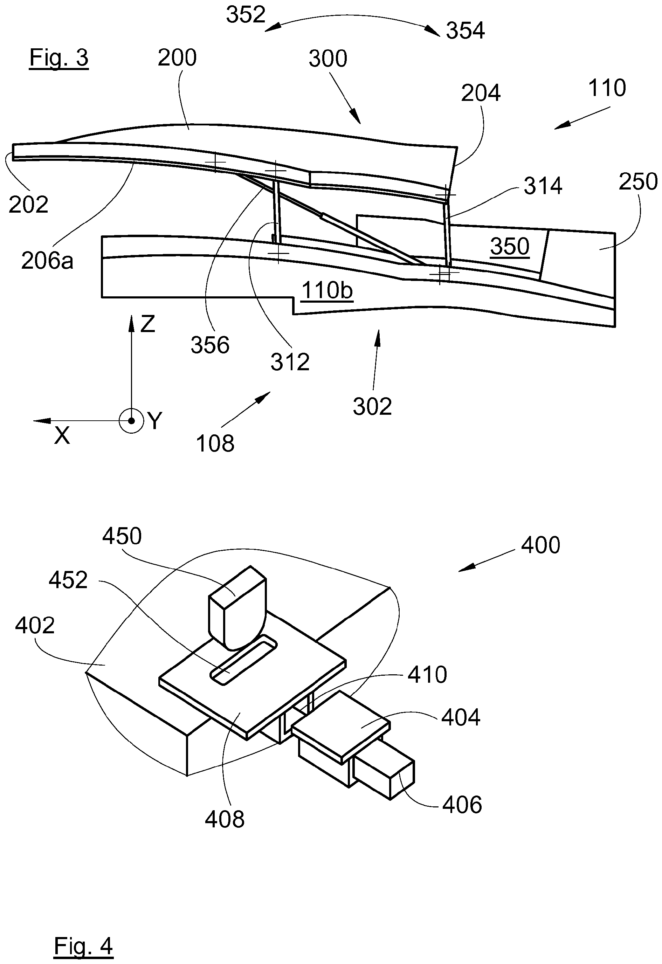

La Fig. 2 montre la jonction entre l'ensemble turbomachine 108 et le mât d'accrochage 106. La nacelle 110 comporte une structure (402, Fig. 4) et plusieurs capots (ou carénages) 110a-b, 200 qui sont fixés à la structure 402 afin de réaliser une surface aérodynamique.

L'ensemble turbomachine 108 comporte une zone d'accrochage 250 au niveau de laquelle le mât d'accrochage 106 est fixé à la structure 402.

De manière connue, la nacelle 110 comprend une entrée d'air 109 par laquelle le moteur aspire l'air nécessaire à son fonctionnement et qui est délimitée par un premier capot 110a formant une lèvre d'entrée d'air.

La nacelle 110 comporte également en arrière du premier capot 110a, des deuxièmes capots 110b prenant une forme d'arc de cylindre et formant les parois latérales de la nacelle 110.

La nacelle 110 comporte en partie haute de la nacelle 110, à l'arrière du premier capot 110a et entre ledit premier capot 110a et la zone d'accrochage 250 au mât d'accrochage 106, un capot articulé 200 selon l'invention. Le capot articulé 200 ainsi défini remplace la pluralité de capots fixés par vis qui existe dans l'état de la technique. L'utilisation d'un seul capot articulé et étendu améliore entre autres l'aérodynamisme par la réduction du nombre de fixations et de frontières entre les capots.

Le capot articulé 200 est également disposé entre les deuxièmes capots 110b.

Le capot articulé 200 comporte quatre bords 202, 204 et 206a-b opposés deux à deux.

Le capot articulé 200 présente plus particulièrement un bord avant 202 qui est disposé à l'avant du capot articulé 200 par rapport à l'axe longitudinal X et qui est globalement parallèle à l'axe transversal Y. Le bord avant 202 s'étend contre le premier capot 110a.

Le capot articulé 200 présente plus particulièrement un bord arrière 204 qui est disposé à l'arrière du capot articulé 200 par rapport à l'axe longitudinal X et qui est également globalement parallèle à l'axe transversal Y. Le bord arrière 204 s'étend au niveau de la zone d'accrochage 250 avec le mât d'accrochage 106.

Le capot articulé 200 présente également deux bords latéraux 206a-b qui sont disposés à bâbord et à tribord du capot articulé 200 et qui sont globalement parallèles à l'axe longitudinal X. Chaque bord latéral 206a-b s'étend contre un deuxième capot 110b.

Le capot articulé 200 est monté articulé sur la structure 402 de la nacelle 110 entre une position fermée et une position ouverte. La Fig. 2 montre le capot articulé 200 en position fermée dans laquelle le capot articulé 200 est en continuité aérodynamique avec les autres capots 110a-b de la nacelle 110 et la Fig. 3 montre la position ouverte dans laquelle le capot articulé 200 libère une ouverture dans la nacelle 110 afin d'accéder à l'intérieur de la nacelle 110 et en particulier aux systèmes de l'aéronef 100 qui s'étendent entre le mât d'accrochage 106 et le moteur.

La nacelle 110 comporte un système d'articulation 300 qui est disposé le long des deux bords latéraux 206a-b et un système de verrouillage qui est actionnable depuis l'extérieur de la nacelle 110 par un technicien entre une position verrouillée dans laquelle le système de verrouillage verrouille le capot articulé 200 sur la structure 402, bloquant ainsi tout déplacement du capot articulé 200, et une position déverrouillée dans laquelle le système de verrouillage ne verrouille pas le capot articulé 200 sur la structure 402, autorisant ainsi un libre déplacement du capot articulé 200.

Le système d'articulation 300 est fixé entre le capot articulé 200 et la structure 402 de la nacelle 110 et assure le déplacement du capot articulé 200 entre la position fermée et la position ouverte et inversement.

Le système d'articulation 300 comporte, de part et d'autre du plan médian XZ de la nacelle 110, une bielle avant 312 et une bielle arrière 314 qui sont l'une devant l'autre par rapport à l'axe longitudinal X.

Les deux extrémités de chaque bielle 312, 314 sont dans un même plan parallèle au plan médian XZ.

Les deux extrémités de chaque bielle 312, 314 sont montées mobiles en rotation autour d'un axe de rotation perpendiculaire au plan médian XZ et ici parallèle à l'axe transversal Y. Une première extrémité de chaque bielle 312, 314 est montée articulée sur le capot articulé 200 et une deuxième extrémité de chaque bielle 312, 314 est montée articulée sur la structure 402 de la nacelle 110.

Les deux bielles avant 312 et arrière 314 qui sont disposées du même côté forment avec le capot articulé 200 et la structure 402 de la nacelle 110, un quadrilatère déformable 302. Sur la Fig. 3, seul le quadrilatère déformable 302 qui est à bâbord est vu et celui qui est à tribord est identique.

Un tel système d'articulation 300 permet une grande ouverture du capot articulé 200 et rend, facile et rapide, l'accès aux systèmes 350 de l'aéronef 100 qui sont au niveau de la jonction entre le mât d'accrochage 106 et le moteur.

Sur la Fig. 3, la flèche 352 orientée vers l'avant montre le sens de déplacement du capot articulé 200 pour atteindre la position ouverte et la flèche 354 orientée vers l'arrière montre le sens de déplacement du capot articulé 200 pour atteindre la position fermée.

Le système de verrouillage comporte par exemple plusieurs loquets 400 répartis autour du capot articulé 200 afin d'assurer un bon maintien du capot articulé 200 en position fermée.

La Fig. 4 montre un exemple d'un loquet 400 et il y a, par exemple, un loquet 400 à chaque coin du capot articulé 200.

Le loquet 400 comporte un coffre 404 qui est fixé sous le capot articulé 200 et qui porte un pêne 406, et une têtière 408 qui est fixée à la structure 402 et qui porte une gâche 410. Le pêne 406 est mobile en translation dans le coffre 404 entre une position verrouillée dans laquelle il se verrouille dans la gâche 410 et une position déverrouillée dans laquelle il ne se verrouille pas dans la gâche 410.

En position fermée, le coffre 404 est en regard de la têtière 408, et un technicien peut manipuler le pêne 406 pour le faire passer alternativement de la position verrouillée à la position déverrouillée.

La manipulation du pêne 406 s'effectue par tous moyens connus. Par exemple, par une tirette accessible depuis l'extérieur du capot articulé 200.

Pour assurer un bon alignement du capot articulé 200 en position fermée, la nacelle 110 comporte un système d'alignement. Le système d'alignement comporte plusieurs tétons 450 qui sont fixés sous le capot articulé 200 et, pour chaque téton 450, une fenêtre 452 solidaire de la structure 402, où en position fermée, chaque téton 450 se positionne dans une fenêtre 452. Dans le mode de réalisation de l'invention présenté ici, la fenêtre 452 est réalisée dans la têtière 408. Il y a plusieurs tétons 450 et fenêtres 452 répartis autour du capot articulé 200, par exemple à chaque coin.

Pour aider au soulèvement du capot articulé 200 vers la position ouverte, la nacelle 110 comporte au moins un vérin 356 dont une extrémité est montée articulée sur la structure 402 et dont l'autre extrémité est montée articulée sur le capot articulé 200. Le vérin 356 assiste l'ouverture du capot articulé 200 et assure le maintien en position ouverte et est par exemple un vérin à gaz.

## Revendications

1. Ensemble turbomachine (108) d'un aéronef (100) comprenant une nacelle (110), ladite nacelle (110) comportant :
- une structure (402) comportant une zone d'accrochage (250) destinée à se fixer à un mât d'accrochage (106) de l'aéronef (100),
- une entrée d'air (109) délimitée par un premier capot (110a) formant une lèvre d'entrée d'air et fixé à la structure (402),
- un capot articulé (200) disposé en partie haute de la nacelle (110), à l'arrière du premier capot (110a) et entre ledit premier capot (110a) et la zone d'accrochage (250),
- un système d'articulation (300) assurant le déplacement du capot articulé (200) alternativement entre une position fermée dans laquelle le capot articulé (200) est en continuité aérodynamique avec les autres capots (110a-b) et une position ouverte dans laquelle le capot articulé (200) libère une ouverture dans la nacelle (110), et comportant de part et d'autre d'un plan médian XZ de la nacelle (110), une bielle avant (312) et une bielle arrière (314) qui sont l'une devant l'autre, où les deux extrémités de chaque bielle (312, 314) sont dans un même plan parallèle au plan médian XZ, où une première extrémité de chaque bielle (312, 314) est montée articulée sur le capot articulé (200), où une deuxième extrémité de chaque bielle (312, 314) est montée articulée sur la structure (402),
- un système de verrouillage actionnable depuis l'extérieur de la nacelle (110) entre une position verrouillée dans laquelle le système de verrouillage verrouille le capot articulé (200) sur la structure (402) et une position déverrouillée dans laquelle le système de verrouillage ne verrouille pas le capot articulé (200) sur la structure (402) et
- au moins un vérin (356) dont une extrémité est montée articulée sur la structure (402) et dont l'autre extrémité est montée articulée sur le capot articulé (200) et qui est agencé pour assister l'ouverture du capot articulé (200) et pour assurer le maintien en position ouverte du capot articulé (200).

2. Ensemble turbomachine (108) selon la revendication 1, où le système de verrouillage comporte plusieurs loquets (400) répartis autour du capot articulé (200).

3. Ensemble turbomachine (108) selon la revendication 2, où chaque loquet (400) comporte un coffre (404) fixé sous le capot articulé (200) et portant un pêne (406), et une têtière (408) fixée à la structure (402) et portant une gâche (410), où le pêne (406) est mobile en translation dans le coffre (404) entre une position verrouillée dans laquelle il se verrouille dans la gâche (410) et une position déverrouillée dans laquelle il ne se verrouille pas dans la gâche (410).

4. Ensemble turbomachine (108) selon l'une des revendications 1 à 3, où il comporte plusieurs tétons (450) fixés sous le capot articulé (200) et, pour chaque téton (450), une fenêtre (452) solidaire de la structure (402), où en position fermée, chaque téton (450) se positionne dans une fenêtre (452).

5. Aéronef (100) comportant un mât d'accrochage (106) et un ensemble turbomachine selon l'une des revendications précédentes, accroché audit mât d'accrochage (106) au niveau de la zone d'accrochage (250).

## Patentansprüche

1. Turbotriebwerksanordnung (108) eines Luftfahrzeugs (100), die eine Gondel (110) umfasst, die Gondel (110) aufweisend:
- eine Struktur (402), die einen Aufhängungsbereich (250) aufweist, der dazu bestimmt ist, an einem Aufhängungspylon (106) des Luftfahrzeugs (100) befestigt zu werden,
- einen Lufteinlass (109), der von einer ersten Abdeckung (110a) begrenzt ist, die eine Lufteinlasslippe bildet und an der Struktur (402) befestigt ist,
- eine Gelenkabdeckung (200), die im oberen Abschnitt der Gondel (110) hinter der ersten Abdeckung (110a) und zwischen der ersten Abdeckung (110a) und dem Aufhängungsbereich (250) angeordnet ist,
- ein Gelenksystem (300), das die Bewegung der Gelenkabdeckung (200) abwechselnd zwischen einer geschlossenen Position, in der die Gelenkabdeckung (200) in aerodynamischer Kontinuität mit den anderen Abdeckungen (110a-b) verläuft, und einer offenen Position, in der die Gelenkabdeckung (200) eine Öffnung in der Gondel (110) freigibt, sicherstellt, und beiderseits einer Mittelebene XZ der Gondel (110) eine vordere Pleuelstange (312) und eine hintere Pleuelstange (314) aufweist, wobei sich eine vor der anderen befindet, wobei sich die zwei Enden jeder Pleuelstange (312, 314) in einer selben Ebene parallel zur Mittelebene XZ befinden, wobei ein erstes Ende jeder Pleuelstange (312, 314) an der Gelenkabdeckung (200) angelenkt ist, wobei ein zweites Ende jeder Pleuelstange (312, 314) an der Struktur (402) angelenkt ist,
- ein Verriegelungssystem, das von außerhalb der Gondel (110) zwischen einer verriegelten Position, in der das Verriegelungssystem die Gelenkabdeckung (200) an der Struktur (402) verriegelt, und einer entriegelten Position, in der das Verriegelungssystem die Gelenkabdeckung (200) nicht an der Struktur (402) verriegelt, betätigt werden kann, und
- mindestens einen Zylinder (356), dessen eines Ende an der Struktur (402) angelenkt ist und dessen anderes Ende an der Gelenkabdeckung (200) angelenkt ist, und der angeordnet ist, die Öffnung der Gelenkabdeckung (200) zu unterstützen und den Halt der Gelenkabdeckung (200) in der offenen Position sicherzustellen.

2. Turbotriebwerksanordnung (108) nach Anspruch 1, wobei das Verriegelungssystem mehrere Schlösser (400) aufweist, die um die Gelenkabdeckung (200) herum verteilt sind.

3. Turbotriebwerksanordnung (108) nach Anspruch 2, wobei jedes Schloss (400) einen Kasten (404), der unter der Gelenkabdeckung (200) befestigt ist und einen Riegel (406) trägt, und einen Stulp (408), der an der Struktur (402) befestigt ist und ein Schließteil (410) trägt, aufweist, wobei der Riegel (406) im Kasten (404) zwischen einer verriegelten Position, in der er im Schließteil (410) verriegelt ist, und einer entriegelten Position, in der er nicht im Schließteil (410) verriegelt ist, verschiebbar ist.

4. Turbotriebwerksanordnung (108) nach einem der Ansprüche 1 bis 3, wobei sie mehrere Ansätze (450), die unter der Gelenkabdeckung (200) befestigt sind, und für jeden Ansatz (450) ein Fenster (452), das fest mit der Struktur (402) verbunden ist, aufweist, wobei in der geschlossenen Position jeder Ansatz (450) in einem Fenster (452) positioniert ist.

5. Luftfahrzeug (100) aufweisend einen Aufhängungspylon (106) und eine Turbotriebwerksanordnung nach einem der vorhergehenden Ansprüche, die am Aufhängungsbereich (250) am Aufhängungspylon (106) aufgehängt ist.

## Claims

1. Turbine engine assembly (108) of an aircraft (100) including a nacelle (110), said nacelle (110) comprising:
- a structure (402) comprising an attachment zone (250) intended for being fastened to an attachment strut (106) of the aircraft (100),
- an air intake (109) defined by a first cover (110a) forming an air intake lip and fastened to the structure (402),
- a hinged cover (200) arranged on the upper portion of the nacelle (110), at the rear of the first cover (110a) and between said first cover (110a) and the attachment zone (250),
- a hinge system (300) ensuring the movement of the hinged cover (200) alternately between a closed position in which the hinged cover (200) is aerodynamically continuous with the other covers (110a-b) and an open position in which the hinged cover (200) clears an opening in the nacelle (110), and comprising on either side of a mid-plane XZ of the nacelle (110), a front rod (312) and a rear rod (314) that are one in front of the other, where the two ends of each rod (312, 314) are in the same plane parallel to the mid-plane XZ, where a first end of each rod (312, 314) is mounted hinged on the hinged cover (200), where a second end of each rod (312, 314) is mounted hinged on the structure (402),
- a locking system that can be actuated from the outside of the nacelle (110) between a locked position in which the locking system locks the hinged cover (200) onto the structure (402) and an unlocked position in which the locking system does not lock the hinged cover (200) onto the structure (402), and
- at least one cylinder (356) one end of which is mounted hinged on the structure (402) and the other end of which is mounted hinged on the hinged cover (200) and that is arranged to assist the opening of the hinged cover (200) and to ensure that the hinged cover (200) is held in the open position.

2. Turbine engine assembly (108) according to Claim 1, where the locking system comprises several catches (400) distributed around the hinged cover (200).

3. Turbine engine assembly (108) according to Claim 2, where each catch (400) comprises a case (404) fastened to the hinged cover (200) and containing a bolt (406), and an edge plate (408) fastened to the structure (402) and containing a keeper (410), where the bolt (406) is translatably mobile in the case (404) between a locked position in which it is locked in the keeper (410) and an unlocked position in which it is not locked in the keeper (410).

4. Turbine engine assembly (108) according to one of Claims 1 to 3, where it comprises several studs (450) fastened under the hinged cover (200) and, for each stud (450), a window (452) rigidly connected to the structure (402), where in the closed position, each stud (450) is positioned in a window (452).

5. Aircraft (100) comprising an attachment strut (106) and a turbine engine assembly according to one of the previous claims, attached to said attachment strut (106) in the attachment zone (250).
